Europäisches Patentamt

European Patent Office

Office européen des brevets

(11) Veröffentlichungsnummer: **0 512 369 A2**

## (12) EUROPÄISCHE PATENTANMELDUNG

(21) Anmeldenummer: **92107231.0**

(22) Anmeldetag: **28.04.92**

(30) Priorität: **06.05.91 DE 4114656**

(43) Veröffentlichungstag der Anmeldung:
**11.11.92 Patentblatt 92/46**

(84) Benannte Vertragsstaaten:
**AT DE FR GB IT NL**

(51) Int. Cl.⁵: **H04N 5/92**

(71) Anmelder: **Nokia (Deutschland) GmbH**
**Östliche Karl-Friedrich-Strasse 132**
**W-7530 Pforzheim(DE)**

(72) Erfinder: **Reime, Gerd**
**Friedenstrasse 88**
**W-7542 Schömberg(DE)**

(54) **Leuchtdichte Übertragungskanal für ein Videorecorder.**

(57) Ein Videorecorder enthält in seinem Leuchtdichteübertragungskanal (8) zusätzlich zu den herkömmlichen Schaltungsanordnungen eine Phasensynchronisieranordnung (21), die von einer Startanordnung (22) gesteuert wird. Abhängig davon synchronisiert die Phasensynchronisieranordnung die Phasenablage bestimmter Schwingungen, die vom Frequenzmodulator (10) des Übertragungskanals (8) aus dem amplitudenmodulierten Leuchtdichtesignal am Signalausgang (11) des Frequenzmodulators erzeugt werden, mit einer Bezugsschwingung. Dadurch werden von der unterschiedlichen Phasenlage benachbarter Schwingungen benachbarter Videozeilen erzeugte Moiré-Störungen bei der Bildwiedergabe auf einen Aufzeichnungsträger (7) aufgezeichneter Videobilder weitgehend vermieden.

FIG.2

Die Erfindung betrifft einen Videorecorder nach dem Oberbegriff des Anspruches 1 mit einem Leuchtdichteübertragungskanal.

Aus der DE-Zeitschrift "Funkschau" Heft 15/1984, Seiten 42 bis 45, ist es beispielsweise bekannt, den Übertragungsweg der Videosignale in einen Leuchtdichteübertragungskanal und einen Farbsignalübertragungskanal aufzuteilen, wobei der Leuchtdichteübertragungskanal auch die Synchron- und Austastsignale mit überträgt. Der Leuchtdichteübertragungskanal enthält einen Frequenzmodulator, der die amplitudenmodulierten Leuchtdichtesignale zur besseren Aufzeichnung auf ein Videoband in frequenzmodulierte Leuchtdichtesignale wandelt, und einen Frequenzdemodulator, der die von einem Videoband abgetasteten frequenzmodulierten Leuchtdichtesignale in amplitudenmodulierte Leuchtdichtesignale rückwandelt. Vor dem Eingang des Frequenzmodulators und hinter dem Ausgang des Frequenzdemodulators enthält der Leuchtdichteübertragungskanal Mittel zur Korrektur der Phasenlaufzeiten und zur Verbesserung der Bildschärfe und zur Verminderung des Rauschens. Dennoch tritt bei der Wiedergabe auf einem Videoband gespeicherter Videobilder vorwiegend an Leuchtdichtekanten ein moiréartiges Grieseln auf, das insbesondere in ruhigen Bildbereichen für den Betrachter störend wirkt. Diese Moirés lassen sich durch eine Filterung nicht auslöschen.

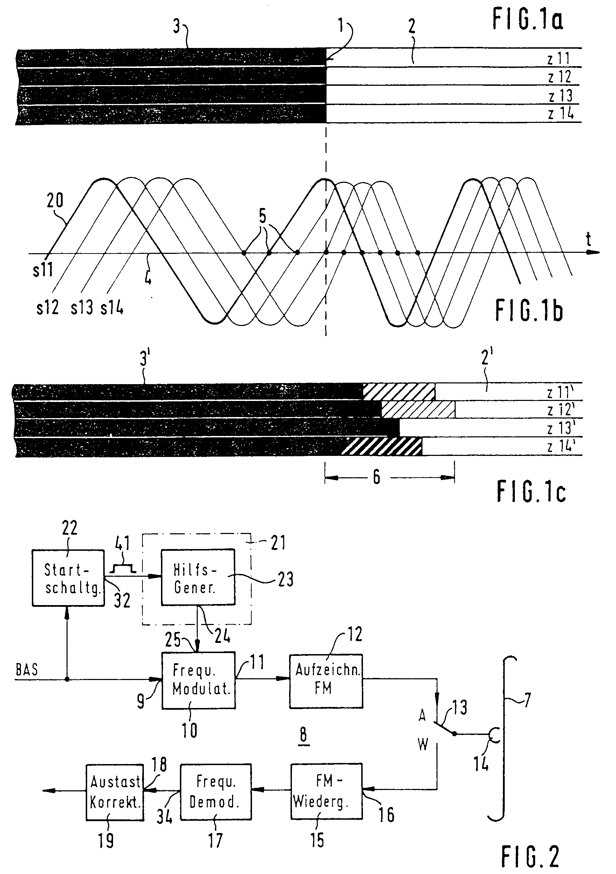

Es ist das Verdienst des Erfinders, die Ursache dieses Moirés erkannt zu haben. Bei der Wiedergabe ruhiger Bildabschnitte mit großflächigen Details kann man davon ausgehen, daß benachbarte Bildzeilen nahezu den gleichen Videosignalinhalt enthalten. Das bedeutet, daß die aufeinanderfolgend übertragenen Videozeilen zwar mit unterschiedlicher Phasenlage ihrer Videosignale beginnen, der Phasenverlauf innerhalb der nacheinander übertragenen Videozeilen aber etwa der gleiche ist und so am Zeilenanfang jeweils etwa die gleiche Phasenablage zur zuvor übertragenen Videozeile auftritt. Es sieht im genannten Fall am Zeilenanfang so aus, als rotiere die Phasenlage von Zeile zu Zeile mit mehr oder weniger gleichbleibender Geschwindigkeit. Dies wird anhand der Figuren 1a bis 1c der Zeichnungen näher erläutert. In Figur 1a ist ein über vier Zeilen z11 bis z14 sich erstreckender Bildausschnitt mit einer senkrechten Leuchtdichtekante 1 dargestellt, die einen hellen Bildanteil 2 von einem dunklen Bildanteil 3 trennt. Ein im Leuchtdichteübertragungskanal enthaltener Frequenzmodulator erzeugt aus den amplitudenmodelierten Leuchtdichtesignalen, deren unmittelbare Bildwiedergabe in einem Ausschnitt in Figur 1a dargestellt ist, an seinem Ausgang die in Figur 1b schematisch dargestellten Schwingungen s11 bis s14, die den Videozeilen z11 bis z14 entsprechen. Diese Schwingungen s11 bis s14 gehen an der Leuchtdichtekante 1 von einer tieferen Frequenz, die einen dunklen Bildanteil darstellt, über in eine höhere Frequenz, die die Leuchtdichte eines hellen Bildanteiles 2 darstellten. Die Mittellinie 4 dieser Schwingungen, die gleichzeitig die Zeitachse dieser Schwingungen ist, enthält an den Stellen, an denen die Schwingungen die Mittellinie 4 kreuzen, die Schaltpunkte 5 eines im Leuchtdichteübertragungskanal angeordneten Frequenzdemodulators. Der Frequenzdemodulator bildet an seinem Ausgang den Schwingungszeiten entsprechende Pegel, außerhalb des Bereiches der Leuchtdichtekante 1 einerseits einen dem dunklen Bildanteil 3 entsprechenden Pegel und andererseits ein dem hellen Bildanteil 2 entsprechenden Pegel. Würden im frequenzmodulierten Bereich der Leuchtdichteübertragung die Videozeilen z11 bis z14 jeweils mit der gleichen Phasenlage beginnen, würden die Schwingungen s11 bis s14 derart übereinander liegen, daß bei der Demodulation dieser Schwingungen wieder eine senkrechte Leuchtdichtekante entstehen würde. Da jedoch die Erzeugung der frequenzmodulierten Leuchtdichtesignale im Frequenzmodulator von der Eigenschwingung des Frequenzmodulators abhängt, entstehen bei dieser Erzeugung Phasenverschiebungen bezüglich des Beginns der Videozeilen z11 bis z14 von beispielsweise jeweils fortschreitend den gleichen Betrag, sodaß die in Figur 1b dargestellten Schwingungszüge s11 bis s14 jeweils um einen gewissen Phasenbetrag auseinander gezogen sind. Dadurch entstehen an dieser Leuchtdichtekante 1 Schwingungshalbwellen mit einer Schwingungszeit, die zwischen der der Halbwellen für den hellen Bildanteil und der des dunklen Bildanteils liegt und die sich im Bereich einer vollen Schwingung um die Leuchtdichtekante bewegt. In diesem Bereich erzeugt der Frequenzdemodulator Leuchtdichtepegel zwischen dem Pegel für den dunklen Bildanteil und dem Pegel für den hellen Bildanteil, wie dies schematisch für die Videozeilen z11' bis z14' im Bildausschnitt der Figur 1c dargestellt ist. Da die Phasenablage einer bestimmten Videozeile, beispielsweise der Zeile z11, von Bild zu Bild bzw. von Halbbild zu Halbbild ebenfalls unterschiedlich und in der Bildreihenfolge statistisch unbestimmt unterschiedlich ist, entsteht bei der Wiedergabe der Videozeilen z11 bis z14, deren Leuchtdichtesignale über einen derartigen Leuchtdichteübertragungskanal übertragen wurden, ein grieselnd sich bewegender Leuchtdichteübergang 6.

Der Erfindung liegt aufgrund dieser Erkenntnis die Aufgabe zugrunde, den Leuchtdichteübertragungskanal derart auszubilden, daß ein derartiges Moiré bei der Bildwiedergabe nicht mehr störend auftritt. Diese Aufgabe wird nach der Erfindung durch die im kennzeichnenden Teil des Anspruches 1 angegebenen Merkmale gelöst.

Durch die phasenmäßige Synchronisierung des Anfanges jeder Bildzeile auf einen bestimmten Bezugszeitpunkt entstehen überraschenderweise auch bei einem verhältnismäßig ruhigen Bild saubere Kanten ohne Moirés bei der Bildwiedergabe von einem beschreibbaren Aufzeichnungsträger, insbesondere einem Videoband. Die hierzu erforderlichen zusätzlichen Schaltungsanordnungen erfordern einen nur unerheblichen zusätzlichen Schaltungsaufwand ohne daß dadurch herkömmlich im Videorecorder vorhandene Schaltungsanordnungen geändert werden müssen.

Die Unteransprüche kennzeichnen vorteilhafte Ausgestaltungen der Erfindung, die insbesondere in der unten stehenden Beschreibung von Ausführungsbeispielen der Erfindung näher erläutert werden. Eine besonders vorteilhafte Ausgestaltung der Erfindung ist die Verwendung einer Korrekturpegelquelle als Zwischenschaltung zwischen der Phasensynchronisieranordnung und dem Signaleingang des Frequenzmodulators, da der Korrekturpegel der Korrekturpegelquelle so klein ist, daß der Aufzeichnungsträger mit der damit phasenkorrigierten Aufzeichnung in jedem Fall kompatibel verwendbar ist, das heißt, daß die phasenkorrigierte Aufzeichnung sowohl von Videoaufzeichnungsgeräten mit als auch von solchen ohne einer Phasensynchronisieranordnung wiedergegeben werden können.

Die Erfindung wird nachfolgend anhand vorteilhafter Ausführungsbeispiele näher erläutert. Die zugehörigen Zeichnungen zeigen in den folgenden Figuren

Fig. 1a      einen Ausschnitt einer Videozeile eines unmittelbar auf einem Bildschirm wiedergegebenen Videobildes mit einer senkrechten Kante eines schwarz-weiß-Überganges;

Fig. 1b      die den in Figur 1a dargestellten Videozeilen zugehörigen Schwingungen des entsprechenden frequenzmodulierten Leuchtdichtesignals am Ausgang eines Frequenzmodulators;

Fig. 1c      die aus den in Fig. 1b dargestellten Schwingungen nach einer Frequenzdemodulation auf einem Bildschirm erzeugten Videozeilen, eines in Fig. 1a dargestellten Bildausschnittes;

Fig. 2      ein Blockschaltbild mit wesentlichen Schaltungsblöcken des die frequenzmodulierten Leuchtdichtesignale übertragenden Leuchtdichteübertragungskanals eines Videorecorders mit einem Hilfsgenerator zur Phasensynchronisierung;

Fig. 3      eine schematische Darstellung einer Phasensynchronisierung des in Fig. 2 im Leuchtdichteübertragungskanal enthaltenen Frequenzmodulators;

Fig. 4a/b      eine schematische Darstellung des Austastzeitraumes einer Videozeile mit den für die Korrektur der Phasenlage auf der Schwarzschulter der Videozeile erzeugten Signalverformungen;

Fig. 5      ein Blockschaltbild eines Teils der Aufzeichnungsseite des in Fig. 2 schematisch dargestellten Leuchtdichteübertragungskanals mit einer einen Phasenvergleicher enthaltenden Phasensynchronisieranordnung;

Fig. 6      ein Blockschaltbild eines Teils der Aufzeichnungsseite des in Fig. 2 schematisch dargestellten Leuchtdichteübertragungskanals mit einer einen Graupegelgenerator enthaltenden Phasensynchronisieranordnung;

Fig. 7      eine schematische Darstellung des Austastzeitraumes einer Videozeile mit einem durch eine Phasensynchronisieranordnung gemäß Fig. 6 erzeugten, die Phasensynchropisierung bewirkenden Signal;

Fig. 8      ein Blockschaltbild eines Teils der Aufzeichnungsseite des in Fig. 2 schematisch dargestellten Leuchtdichteübertragungskanals mit einer Korrekturpegelquelle als Zwischenschaltung;

Fig. 9      eine schematische Darstellung des unsynchronisierten Schwingungsverlaufes der frequenzmodulierten Leuchtdichtesignale am Ausgang des Frequenzmodulators für einige aufeinander folgende Videozeilen am Schaltzeitpunkt der Phasensynchronisieranordnung;

Fig. 10      eine schematische Darstellung des Phasenkorrektursignales der im Blockschaltbild der Figur 8 dargestellten Korrekturpegelquelle;

Fig. 11.      eine schematische Darstellung des mit der in Fig. 8 angegebenen Korrekturpegelquelle synchronisierten Schwingungsverlaufes der frequenzmodulierten Leuchtdichtesignale am Ausgang des Frequenzmodulators für einige aufeinanderfolgende Videozeilen am Schaltzeitpunkt der Phasensynchronisieranordnung;

Fig. 12 Ein Blockschaltbild eines Teils der Aufzeichnungsseite des in Fig. 2 schematisch dargestellten Leuchtdichteübertragungskanals mit einer Zeitmessanordnung als Phasensynchronisieranordnung und einer Korrekturpegelquelle als Zwischenschaltung;

Fig. 13 eine schematische Darstellung der Zeitmessung der in Fig. 12 dargestellten Zeitmessanordnung.

In Figur 2 sind in einem Blockschaltbild die wesentlich die Aufzeichnung auf einen Aufzeichnungsträger 7 und die die Wiedergabe von diesem Aufzeichnungsträger betreffenden Schaltungsanordnungen eines Leuchtdichteübertragungskanals 8 eines sonst nicht näher dargestellten Aufzeichnungs- und Wiedergabegerätes dargestellt. Das die Austastlücke und die Bild- und Zeilensynchronsignale enthaltende amplitudenmodulierte BAS-Leuchtdichtesignal gelangt im Leuchtdichteübertragungskanal 8 an den Leuchtdichteeingang 9 des in dem Übertragungskanal angeordneten Frequenzmodulators 10 und von dessen Signalausgang 11 als frequenzmoduliertes Leuchtdichtesignal über Aufzeichnungsanordnungen 12 und einen Aufnahme-Wiedergabeumschalter 13 sowie über einen Videokopf auf den Aufzeichnungsträger 7. Bei der Wiedergabe von dem Aufzeichnungsträger 7 gelangt das frequenzmodulierte Leuchtdichtesignal wiederum über den umgeschalteten Aufnahme-Wiedergabeumschalter 13 und eine FM-Wiedergabeanordnung 15 an den Signaleingang 16 eines Frequenzdemodulators 17, der das frequenzmodulierte Leuchtdichtesignal in ein amplitudenmoduliertes Leuchtdichtesignal umwandelt und an den Signaleingang 18 einer Austastkorrekturanordnung 19 überträgt. Zur Synchronisation des frequenzmodulierten Leuchtdichtesignales 20, das beispielsweise in Figur 1b dick ausgezogen für einen bestimmten Bereich einer Videozeile z11 (Fig. 1a) dargestellt ist, enthält der Leuchtdichteübertragungskanal 8 auf der Aufzeichnungsseite eine auf den Frequenzmodulator 10 einwirkende Phasensynchronisieranordnung 21, die von einer vor dem Leuchtdichteeingang 9 des Frequenzmodulators an den Leuchtdichteübertragungskanal angeschlossenen Startanordnung 22 gesteuert wird.

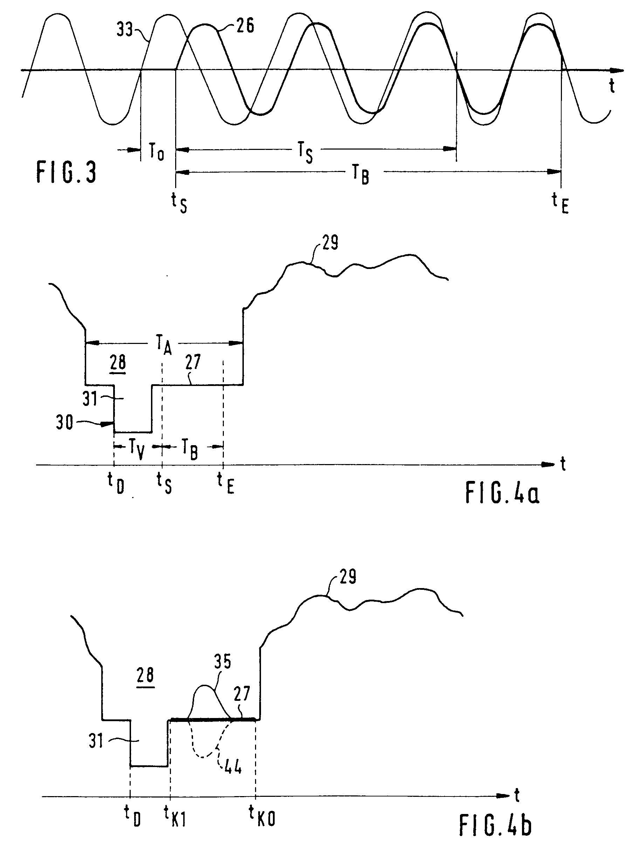

In dem in Figur 2 dargestellten Ausführungsbeispiel ist die Phasensynchronisieranordnung 21 ein Hilfsgenerator 23, dessen Signalausgang 24 an einen Synchroneingang 25 des Frequenzmodulators 10 angeschlossen ist. Die Frequenz der Schwingung 26 des Hilfsgenerators, die im Diagramm der Figur 3 dargestellt ist, ist auf die vom Frequenzmodulator 10 erzeugte Übertragungsfrequenz für den Pegel der Schwarzschulter 27 der im Leuchtdichteübertragungskanal 8 übertragenen Signalanteile der Videozeilen abgestimmt. Eine Austastlücke 28 mit einer derartigen Schwarzschulter 27 ist für ein amplitudenmoduliertes Leuchtdichtesignal 29 einer Videozeile z11 in Figur 4 dargestellt. Die Startanordnung 22 detektiert in jeder im Leuchtdichteübertragungskanal 8 in Amplitudenmodulation übertragenen Videozeile (z11) die Vorderflanke 30 des in der Austastlücke 28 der Videozeile enthaltenen Zeilensynchronsignales 31 und erzeugt zu einem Startzeitpunkt $t_S$, der eine bestimmte, gleichbleibende Verzögerungszeit $T_V$ nach dem Detektionszeitpunkt $t_D$ der Vorderflanke 30 des Zeilensynchronsignales liegt und größer ist als die Zeitdauer des Zeilensynchronsignales, an ihrem Signalausgang 32 ein Schaltsignal 41, das den Hilfsgenerator 23 eine bestimmte Betriebszeit $T_B$ lang in den Schwingbetrieb schaltet. Die Betriebszeit $T_B$ des Hilfsgenerators ist so bemessen, daß der Abschaltzeitpunkt $t_E$ des Hilfsgenerators 23 und damit im dargestellten Ausführungsbeispiel der Abschaltzeitpunkt der Betriebszeit $T_B$ noch innerhalb des Austastzeitraumes $T_A$ der Austastlücke 28 liegt (Figur 4a). Der Hilfsgenerator 23 ist derart ausgestaltet, daß seine Schwingungen zum Startzeitpunkt $t_S$ mit einer bestimmten Phasenlage beginnen, im dargestellten Ausführungsbeispiel (Figur 3) mit der positiven Phasenlage 0. Andererseits ist der Signalausgang 24 des Hilfsgenerators 23 derart an den Synchroneingang 25 des Frequenzmodulators 10 gekoppelt, daß die Schwingung 33 des frequenzmodulierten Leuchtdichtesignales mit wenigen Schwingungen auf die Schwingung 26 des Hilfsgenerators 23 innerhalb der Betriebszeit $T_B$ des Hilfsgenerators synchronisiert ist, wie Figur 3 schematisch darstellt. Während dieser Synchronisierzeit $T_S$ werden in dem in Figur 3 dargestellten Ausführungsbeispiel die Schwingungen 33 des frequenzmodulierten Leuchtdichtesignales durch die synchronisierenden Schwingungen 26 des Hilfsgenerators 23 etwas zusammengedrängt, was einer etwas höheren Übertragungsfrequenz als der Übertragungsfrequenz des Schwarzpegels 27 entspricht. Dadurch entsteht bei der Wiedergabe dieser auf den Aufzeichnungsträger 7 aufgezeichneten Leuchtdichtesignale am Signalausgang 34 des Frequenzdemodulators 17 ein Höcker 35 auf der Schwarzschulter 27 des wiederzugebenden amplitudenmodulierten Leuchtdichtesignales (Fig. 4b), das sich auf die Bildwiedergabe störend auswirken kann und deshalb von der Austastkorrekturanordnung 19 ausgelöscht wird. Die Austastkorrekturschaltung 19 blendet im dargestellten Ausführungsbeispiel die Schwarzschulter 27 zwischen der Rückflanke des Synchronsignales und dem Beginn der Leuchtdichteinformation des Leuchtdichtesignales 29 aus und klemmt danach zwischen diesen Zeitpunkten $t_{K1}$ und $t_{K0}$ das Leuchtdichtesignal 29 auf einen ungestörten, in Figur 4b dick eingezeichneten Schwarzschulterpegel.

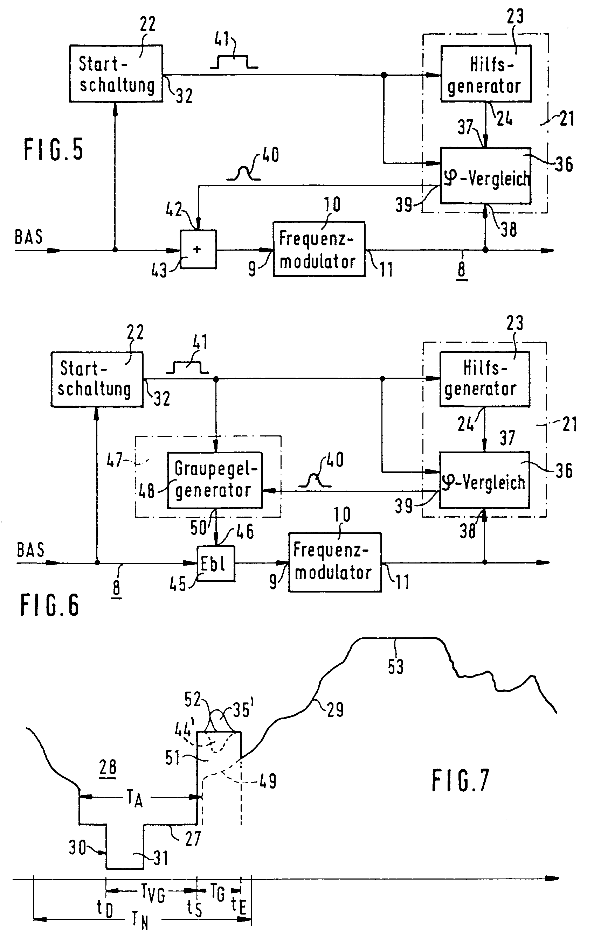

Bei dem in Figur 5 dargestellten Ausführungsbeispiel besteht die Phasensynchronisieranordnung 21 aus dem Hilfsgenerator 23 und einem Phasenvergleicher 36, an dessen Vergleichereingang 37 der Signalausgang 24 des Hilfsgenerators angeschlossen ist und an dessen zweiten Vergleichereingang 38 der Signalausgang 11 des Frequenzmodulators angeschlossen ist. Der Phasenvergleicher 36 wird gleichzeitig mit dem Hilfsgenerator in den Betriebszustand geschaltet und erzeugt an seinem Signalausgang 39, der gleichzeitig der Phasenablagesignalausgang der Phasensynchronisieranordnung 21 ist, ein Phasenablagesignal 40, das von der Phasenablage der am Signalausgang 11 vom Frequenzmodulator 10 erzeugten Schwingung 33 für die Schwarzschulter 27 von der Schwingung 26 des Hilfsgenerators abhängt und dem in Figur 4b dargestellten Höckersignal 35 entspricht. Dieses Phasenablagesignal 40 wird dem Signaleingang 42 einer vor dem Leuchtdichtesignaleingang 9 des Frequenzmodulators im Leuchtdichteübertragungskanal 8 angeordneten Signaladdieranordnung 43 zugeführt, die das Phasenablagesignal 40 pegelmäßig so auf die Schwarzschulter 27 aufprägt, daß die Frequenz der Übertragungsschwingung 33 der Schwarzschulter 27 entsprechend dem Wert des Phasenablagesignales derart verändert wird, daß diese Schwingung 33 innerhalb der Betriebszeit $T_B$ der Phasensynchronisieranordnung 21 die Phasenlage der Schwingung 26 des Hilfsgenerators annimmt. Dies erfolgt bei einem positiven Höcker 35 des Phasenablagesignales 40 durch ein Zusammendrängen der die Schwarzschulter übertragenden Schwingung 33 oder bei einem negativen Höcker 44 durch ein Auseinanderziehen der die Schwarzschulter übertragenden Schwingung 33, bis jeweils die Synchronisation mit der Schwingung 26 (Fig. 3) des Hilfsgenerators 23 hergestellt ist.

Das in Figur 5 dargestellte Ausführungsbeispiel führt die Anfangssynchronisation der frequenzmodulierten Leuchtdichtesignale in einer dem in Figur 2 dargestellten Ausführungsbeispiel entsprechenden Weise durch, mit dem Unterschied, daß bei dem Ausführungsbeispiel nach Figur 2 eine unmittelbare Synchronisation durchgeführt wird und die positiven oder negativen Höcker auf der Schwarzschulter bei der Frequenzdemodulation entstehen, während bei dem Ausführungsbeispiel nach Figur 5 diese Höcker vor der Frequenmodulation zur mittelbaren Synchronisation der Zeilenanfänge verwendet werden.

Das in Figur 6 dargestellte Ausführungsbeispiel zur Anfangssynchronisation der Videozeilen enthält ebenfalls eine von einer Startanordnung 22 gesteuerte Phasensynchronisieranordnung 21 mit einem Hilfsgenerator 23 und einem Phasenvergleicher 36. Vor dem Leuchtdichtesignaleingang 9 des Frequenzmodulators 10 ist eine Signaleinblendanordnung 45 im Leuchtdichteübertragungskanal 8 angeordnet. Zwischen dem Phasenablageausgang 39 der Phasensynchronisieranordnung 21 und dem zweiten Signaleingang 46 der Signaleinblendanordnung 45 ist ein Graupegelgenerator 48 als Zwischenschaltung 47 angeordnet. Der Graupegelgenerator wird im dargestellten Ausführungsbeispiel gleichzeitig mit der Phasensynchronisieranordnung 21 in Betrieb geschaltet und gehalten. Diese Einschaltzeit des Graupegelgenerators 48 liegt an einem bestimmten Zeitort des nicht sichtbaren Zeilenbereiches $T_N$ einer Videozeile (z11), im dargestellten Ausführungsbeispiel im noch nicht sichtbaren Teil 49 des amplitudenmodulierten, die Leuchtdichte darstellenden Teils des Leuchtdichtesignales 29 (Figur 7). Ohne Phasenablagesignal oder bei einem Wert Null des Phasenablagesignals erzeugt im dargestellten Ausführungsbeispiel der Graupegelgenerator 48 an seinem Signalausgang 50 ein Graupegelsignal 51, dessen Graupegel 52 etwa in der Mitte zwischen dem Weißpegel 53 und dem Pegel der Schwarzschulter 27 liegt. Der Zeitort des Graupegelsignales 51 wird wiederum von einem Startsignal 41 der Startanordnung 22 bestimmt. Der Abstand des Startzeitpunktes $t_S$ des Grausignales 51 liegt im dargestellten Ausführungsbeispiel um eine Verzögerungszeit $T_{VG}$ hinter dem Detektionszeitpunkt $t_D$ der Vorderflanke 30 des Zeilensynchronsignales 31 am Ende des Austastzeitraumes $T_A$. Sobald das Grausignal 51 am Signaleingang 46 der Signaleinblendanordnung 45 auftritt, blendet die Signaleinblendanordnung 45 dieses Grausignal an die Stelle des dort herrschenden Teiles 49 des amplitudenmodulierten Leuchtdichtesignales in das Leuchtdichtesignal 29 ein. Die Frequenz der Schwingungen des Hilfsgenerators 23 ist auf die Übertragungsfrequenz der den eingeblendeten Graupegel 52 im frequenzmodulierten Bereich des Leuchtdichteübertragungskanals 8 übertragenden Schwingungen des Frequenzmodulators 10 abgestimmt. Der Phasenvergleicher 36 erzeugt ein von der Phasenablage des Ausgangssignales des Frequenzmodulators 10 von den Schwingungen des Hilfsgenerators 22 abhängiges Phasenablagesignal 40 in der Gestalt eines positiven oder negativen Höckers (entsprechend 35 oder 44 in Fig. 4b). Dieses Phasenablagesignal 40 wird von dem Graupegelgenerator 48 derart auf den Graupegel 52 aufgeprägt, daß die Phasenlage der von dem Frequenzmodulator 10 erzeugten Schwingungen für die Übertragung des von dem Graupegelgenerator 48 erzeugten Graupegels 52 die Phasenlage der von dem Hilfsgenerator erzeugten Schwingungen innerhalb der Zeitdauer $T_G$ des Grausignales 51 einnehmen.

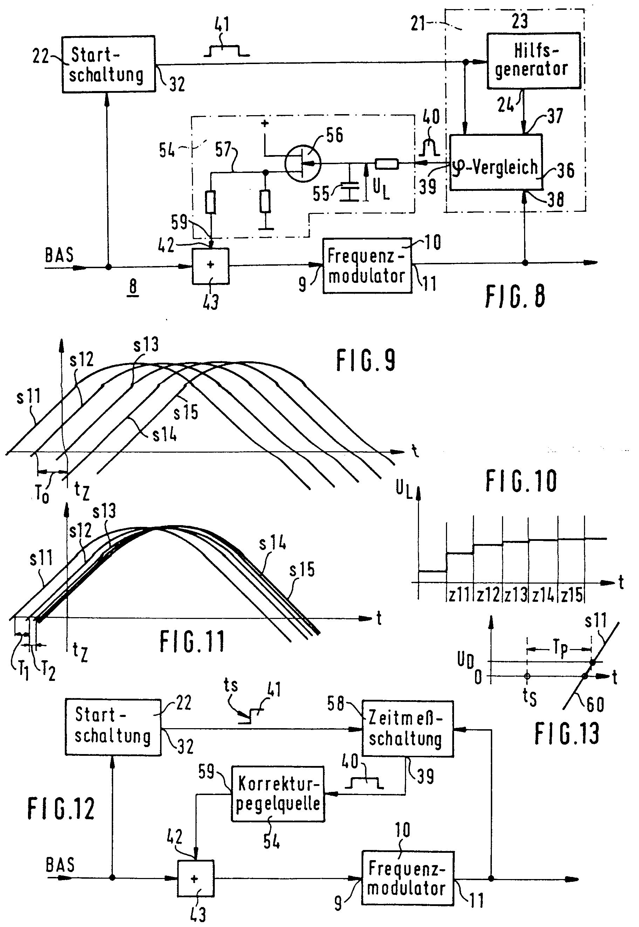

Das in Figur 8 dargestellte Ausführungsbeispiel der Phasensynchronisation des Zeilenanfanges mittels eines Aufzeichnungsträgers übertragener Videozeilen unterscheidet sich von dem in Figur 6 dargestellten Ausführungsbeispiel dadurch, daß die Signaleinblendanordnung 45 eine Signaladdieranordnung 43 ist, an deren Signaleingang 43 eine Korrekturpegelquelle 54 als Zwischenschaltung angeschlossen ist. Die Korrekturpegelquelle 54 besteht im wesentlichen aus einem Ladekondensator 55 mit einer gegenüber einer Zeilendauer niedrigen Zeitkonstante und einem einen Feldeffekttransistor 56 enthaltenden Auskoppelglied 57 an dem Signaleingang 42 der Signaladdieranordnung 43 mit einer gegenüber der Zeilendauer hohen Zeitkonstante. Die Ladezeitkonstante der Korrekturpegelquelle 54 ist in Verbindung mit dem von dem Phasenvergleicher 36 erzeugten Phasenablagesignal 40 derart bemessen, daß die Phasenablage der vom Frequenzmodulator 10 erzeugten Schwingungen zur Übertragung eines bestimmten Pegels des amplitudenmodulierten Leuchtdichtesignales von der Bezugsphasenlage der Schwingungen des Hilfsgenerators 23 nach einigen wenigen aufeinanderfolgenden Videozeilen nahezu beseitigt ist. Dazu wird der Ladespannungspegel $U_L$ während der gesamten Dauer der Videozeilen als Phasenkorrektursignal dem amplitudenmodulierten Leuchtdichtesignal überlagert. Wegen der die ganze Zeilenlänge umfassenden Synchronisierdauer und der Synchronisierung über mehrere Videozeilen hinweg ist der Betrag des Phasenkorrektursignales derart gering, daß dadurch die Leuchtdichte eines wiedergegebenen Bildes für den Betrachter nicht mehr wahrnehmbar verändert ist. Das bedeutet, daß bei der Verwendung einer derartigen Korrekturpegelquelle die Anordnung einer Austastkorrekturanordnung 19 hinter dem Signalausgang 34 des Frequenzdemodulators im wiedergabeseitigen Teil des Leuchtdichteübertragungskanals 8 nicht erforderlich ist. Daher können mit einer derartigen Korrekturpegelquelle phasenkorrigierte Aufzeichnungen mit herkömmlichen Wiedergabegeräten wiedergegeben werden.

Die Arbeitsweise einer Korrekturpegelquelle 54 wird anhand der Figuren 9 bis 11 näher dargestellt. In Figur 9 ist der Schwingungsverlauf der Schwingungen s11 bis s15 in der Helligkeit gleichgestalteter aufeinanderfolgender Videozeilen im frequenzmodulierten aufzeichnungsseitigen Übertragungsbereich des Leuchtdichteübertragungskanals 8 an einem bestimmten Zeitpunkt $t_Z$ ohne eine Phasenkorrektur dargestellt. Die Phasenablage der Schwingungen der einzelnen Videozeilen ist an diesem Zeitpunkt $t_Z$ von Zeile zu Zeile etwa gleich groß, nämlich $T_o$. Bei Verwendung einer Schaltungsausbildung entsprechend der Figur 8 erzeugt der Phasenvergleicher 36 bei einem Vergleich der Ausgangsschwingungen des Frequenzmodulators mit den Ausgangsschwingungen des Hilfsgenerators im Bereich der Schwarzschulter 27 eines Leuchtdichtesignales an seinem Phasenablagesignalausgang 39 ein Phasenablagesignal 40, dessen Signalpegel und Richtung den Betrag und die Richtung der Phasenablage kennzeichnet. Dieses Phasenablagesignal erhöht oder erniedrigt den Ladespannungspegel $U_L$ des Ladekondensators 55 der Korrekturpegelquelle 54, wie dies überhöht im Diagramm der Figur 10 dargestellt ist. Die Richtung des von dem Phasenvergleicher 36 erzeugten Phasenablagesignals 40 ist so bemessen, daß der Ladespannungspegel $U_L$ in einer Richtung geändert wird, in der die Phasenablage der im Frequenzmodulator erzeugten Schwingung für die nächste Videozeile (z12) verringert wird, beispielsweise auf den Ablagewert T1, wie im Diagramm der Figur 11 schematisch dargestellt ist. Dementsprechend ist der Pegel des nächsten von dem Phasenvergleicher 36 erzeugten Phasenablagesignales geringer, so daß in dem dargestellten Ausführungsbeispiel auch eine geringere Zunahme des Ladespannungspegels am Ladekondensator 55 der Korrekturpegelquelle 54 für die Videozeile z12 erzeugt wird, wie das Diagramm in Figur 10 zeigt. Unter der Pegelkurve sind in diesem Diagramm die den einzelnen Pegelstufen zugeordneten Videozeilen angegeben. Mit dieser stufenweisen Phasenkorrektur ist nach wenigen Videozeilen die Phasenkorrektur nahezu gleicher Videozeilen hergestellt. Das in Figur 12 dargestellte Ausführungsbeispiel zur Phasenkorrektur benachbarter Videozeilen unterscheidet sich von dem in Figur 8 dargestellten Ausführungsbeispiel lediglich dadurch, daß die Phasensynchronisieranordnung 21 von einer Zeitmeßanordnung 58 gebildet wird. Die Zeitmeßanordnung 58 erzeugt an ihrem Phasenablagesignalausgang 39 ein Phasenablagesignal 40, dessen Signallänge die Phasenablage $T_P$ einer bestimmten Flanke 60 der dem Startzeitpunkt $t_S$ nächstfolgenden Schwingung s11 oder einer nicht näher dargestellten bestimmten nächsten Schwingung an einem bestimmten Detektionspegel $U_D$ vom Startzeitpunkt $t_S$ ist, wie im Diagramm der Figur 13 dargestellt ist. Die Richtung des von der Zeitmeßanordnung 58 erzeugten Phasenablagesignales 40 wird von der Richtung der Schwingung s11 des frequenzmodulierten Leuchtdichtesignales bestimmt. Die Länge und Richtung des Phasenablagesignales 40 bestimmt die Pegelschritte des Ladespannungspegels $U_L$ am Ladekondensator der Korrekturpegelquelle entsprechend dem Pegeldiagramm der Figur 10 derart, daß die Phasenablage der aufeinanderfolgenden Videozeilen verringert wird.

## Patentansprüche

1. Videorecorder mit einem in einem Leuchtdichteübertragungskanal (8) enthaltenen Frequenzmodulator (10), der mittels einer Schwingung von pegelabhängiger Frequenz amplitudenmodulierte Leuchtdichtesignale (29) in frequenzmodulierte Leuchtdichtesignale (20) wandelt, **dadurch gekennzeichnet,**

- daß eine eine bestimmte Flanke (30) der Zeilensynchronimpulse (31) detektierende Startanordnung (22) am Detektionszeitpunkt ($t_D$) dieser Flanke oder an einem Schaltzeitpunkt ($t_S$), der eine bestimmte, gleichbleibende Verzögerungszeit ($t_V$) vom Detektionszeitpunkt entfernt ist und innerhalb der Austastlücke (28) einer Videozeile (z11,...,z14) liegt, ein Startsignal (41) zum Starten einer Phasensynchronisieranordnung (21) erzeugt

- und daß die an den Frequenzmodulator (10) angeschlossene und in jeder Videozeile erneut gestartete Phasensynchronisieranordnung ein derartiges Ausgangssignal zur Synchronisierung des Frequenzmodulators erzeugt, daß die im Frequenzmodulator erzeugten Schwingungen (33) des frequenzmodulierten Leuchtdichtesignals (20) in eine bestimmte Bezugsphasenlage zur detektierten Flanke (30) des Zeilensynchronimpulses (31) gelangt.

2. Videorecorder nach Anspruch 1, **dadurch gekennzeichnet,**
daß die Phasensynchronisieranordnung (21) ein in jeder übertragenen Videozeile (z11,...,z14) nach dem Zeilensynchronimpuls (31) erneut gestarteter, jeweils in einer bestimmten, gleichen Phasenlage anschwingender und nicht über den Austastzeitraum ($T_A$) hinausschwingender Hilfsgenerator (23) ist,

- dessen Signalausgang (24) an einen Synchroneingang (25) des Frequenzmodulators (10) angeschlossen ist

- und der auf die Übertragungsfrequenz der Schwarzschulter (27) der im FM-Bereich zu übertragenden Videozeilen abgestimmt ist.

3. Videorecorder nach Anspruch 1, **dadurch gekennzeichnet,**
- daß die Phasensynchronisieranordnung (21) einen in jeder übertragenen Videozeile (z11,...,z14) nach dem Zeilensynchronimpuls (31) erneut gestarteten, jeweils in einer bestimmten, gleichen Phasenlage anschwingenden und nicht über den Austastzeitraum ($T_A$) hinausschwingenden Hilfsgenerators (23) und einen Phasenvergleicher (36) enthält, an dessen Vergleichereingänge (37, 38) der Signalausgang (24) des Hilfsgenerators und der Signalausgang (11) des Frequenzmodulators (10) angeschlossen ist und der an einem Phasenablagesignalausgang (39) ein die Phasenablage ($T_o$) des verglichenen frequenzmodulierten Leuchtdichtesignals (33) von den Schwingungen (26) des Hilfsgenerators in Betrag und Richtung anzeigendes Phasenablagesignal (40) erzeugt,

- und daß das Phasenablagesignal unmittelbar oder über eine Zwischenschaltung (47) die Phasenablage mindernd an einen Signaleingang (46) einer im Leuchtdichteübertragungskanal (8) angeordneten Einblendanordnung (45) gelegt ist, die dem Leuchtdichtesignaleingang (9) des Frequenzmodulators (10) vorgeschaltet ist.

4. Videorecorder nach Anspruch 3, **dadurch gekennzeichnet,**
- daß der Hilfsgenerator (23) auf die Übertragungsfrequenz der Schwarzschulter (27) der im FM-Bereich zu übertragenden Videozeilen (z11,...,z14) abgestimmt ist und

- daß der Schaltzeitpunkt ($t_S$) für das Einschalten des Hilfsgenerators im Zeitbereich der Schwarzschulter der Videozeilen hinter dem Zeilensynchronimpuls (31) angeordnet ist.

5. Videorecorder nach Anspruch 1, **dadurch gekennzeichnet,**
- daß die Phasensynchronisieranordnung (21) eine im Austastzeitraum ($T_A$) jeder zu übertragenden Videozeile (z11,...,z14) erneut gestartete Zeitmeßschaltung (58) enthält, die an einem Phaseablagesignalausgang (39) ein die Zeitdifferenz ($T_p$) zwischen dem Startzeitpunkt ($t_s$) der Zeitmeßschaltung und einer bestimmten Flanke (60) einer bestimmten Schwingung (s11) des frequenzmodulierten Leuchtdichtesignals anzeigendes Phasenablagesignal (40) zur Regelung des Frequenzmodulators (10) auf eine verminderte Phasenablage (T1) erzeugt,

- und daß das Phasenablagesignal mittelbar oder über eine Zwischenschaltung (47) die Phasenabweichung mindernd an einen Signaleingang (46) einer im Leuchtdichteübertragungskanal (8) angeordneten Einblendanordnung (45) gelegt ist, die dem Leuchtdichtesignaleingang (9) des Frequenzmodulators (10) vorgeschaltet ist.

**6.** Videorecorder nach einem der Ansprüche 3 bis 5,
**dadurch gekennzeichnet**,
daß die Zwischenschaltung ein Graupegelgenerator (48) ist,

- der im nicht sichtbaren Zeitbereich ($T_N$) der übertragenen Videozeilen ($z11,...,z14$) durch ein Startsignal (41) der Startanordnung (22) ab einem bestimmten Schaltzeitpunkt ($t_S$) an einen Signaleingang (46) der Einblendanordnung (45) angeschlossen ist
- und der an seinem Signalausgang (50) ein in das amplitudenmodulierte Leuchtdichtesignal (29) einzublendendes Graupegelsignal (51) erzeugt, dessen Pegelwert und/oder dessen Signaldauer ($T_G$) derart vom Phasenablagesignal (40) der Phasensynchronisieranordnung (21) abhängig bemessen ist, daß die Phasenablage des frequenzmodulierten Leuchtdichtesignales von der Bezugsphasenlage sich gegen Null gehend verkleinert.

**7.** Videorecorder nach Anspruch 6,
**dadurch gekennzeichnet**,
- daß der Graupegelgenerator (48) ein Graupegelsignal (51) einer bestimmten Signaldauer ($T_G$) erzeugt, dessen Graupegel (52) etwa in der Mitte zwischen dem Weißpegel (53) des amplitudenmodulierten Leuchtdichtesignales und dem Pegelwert der Schwarzschulter (27) liegt,
- daß daß Phasenablagesignal (40) das Ausgangssignal des Phasenvergleichers (36) ist, an dessen Vergleichereingänge (37, 38) der Signalausgang (11) des Frequenzmodulators (10) und der Signalausgang (24) des Hilfsgenerators (23) angeschlossen ist,
- und daß der Hilfsgenerator auf die Übertragungsfrequenz des Graupegelsignals im Zustand ohne eine Phasenablage der im FM-Bereich zu übertragenden Videozeilen ($z11,...,z14$) abgestimmt ist.

**8.** Videorecorder nach einem der Ansprüche 3 bis 5,
**dadurch gekennzeichnet,**
- daß die Zwischenschaltung eine Korrekturpegelquelle (54) ist, die an ihrem Signalausgang (59) ein schrittweise vom Phasenablagesignal (40) des Phasenablageausganges (39) der Phasensynchronisieranordnung (21) verstelltes, die Phasenablage (To) minderndes Phasenkorrektursignal erzeugt,
- und daß die vor dem Leuchtdichtesignaleingang (9) des Frequenzmodulators (10) angeordnete Einblendanordnung eine Signaladditionsanordnung (43) ist, die das amplitudenmodulierte Leuchtdichtesignal (29) dem Korrektursignal der Korrekturpegelquelle überlagert.

**9.** Videorecorder nach Anspruch 8,
**dadurch gekennzeichnet**,
daß die Korrekturregelquelle (54) einen Ladekondensator (55) einer Ladezeitkonstante enthält, die wesentlich kleiner ist als eine Zeilenlänge, und daß der Ladezeitkondensator durch einen Feldeffekttransistor (56) hochohmig vom Signalausgang der Korrekturregelquelle entkoppelt ist.

**10.** Videorecorder nach einem der Ansprüche 1 bis 6,
**dadurch gekennzeichnet**,
daß dem Signalausgang (34) eines im Leuchtdichteübertragungskanal (8) angeordneten Frequenzdemodulators (17) eine Austastkorrekturanordnung (19) nachgeschaltet ist, die eine Anordnung zum Ausblenden des Bereiches der Schwarzschulter (27) hinter dem Zeilensynchronimpuls (31) und zum Klemmen dieses Bereiches auf den Pegel der Schwarzschulter enthält.

FIG.1a

z 11
z 12
z 13
z 14

FIG.1b

s11
s12  s13  s14

t

FIG.1c

z 11'
z 12'
z 13'
z 14'

FIG.2

Startschaltg.

Hilfs-
Gener.

Frequ.
Modulat.

Aufzeichn.
FM

BAS

A
W

Austast
Korrekt.

Frequ.
Demod.

FM -
Wiederg.

FIG.3

$T_0$

$T_S$

$T_B$

$t_S$

$t_E$

FIG.4a

$T_A$

$\underline{28}$

27

31

30

$T_V$

$T_B$

$t_D$

$t_S$

$t_E$

t

FIG.4b

29

$\underline{28}$

35

27

31

44

$t_D$

$t_{K1}$

$t_{K0}$

t

**FIG.5**

| 22 | 41 | 23 |
|---|---|---|

Startschaltung
32

Hilfsgenerator
24
21
36

37

40

42

$\varphi$-Vergleich
39
38

BAS

43
+
9
Frequenzmodulator
11
8

10

**FIG.6**

Startschaltung
32
22

41

Hilfsgenerator
23

24
21
36

47
48
Graupegelgenerator
50
40
37

39
$\varphi$-Vergleich

BAS
8
45
46
Ebl
9
Frequenzmodulator
10
11
38

**FIG.7**

53

29

52
35'
44'
51
28
49

$T_A$

30
31
27

$t_D$   $T_{VG}$   $t_S$   $T_G$   $t_E$

$T_N$

FIG. 8

FIG.9

FIG.10

FIG.11

FIG.12

FIG.13